# EUROPÄISCHE PATENTSCHRIFT

(11) **EP 0 847 907 B1**
(45) Veröffentlichungstag und Bekanntmachung des Hinweises auf die Patenterteilung: **26.09.2001**
(21) Anmeldenummer: 97117444.6
(22) Anmeldetag: 09.10.1997
(51) Int. Cl.: B60T 8/18

(54) **Lastabhängig steuerbare Bremskraftregelventileinrichtung**
Load dependant brake force control valve
Dispositif de soupape de contrôle de force de freinage en fonction de la charge

(30) Priorität: 13.12.1996 DE 19651898
(43) Veröffentlichungstag der Anmeldung: 17.06.1998
(73) Patentinhaber: WABCO GmbH & Co. OHG, 30453 Hannover (DE)
(72) Erfinder: Fauck, Gerhard, 30559 Hannover (DE); Kiel, Bernd, 31515 Wunstorf (DE); Tammen, Jürgen, 29690 Lindwedel (DE)
(74) Vertreter: Schrödter, Manfred, Dipl.-Ing.

(56) Entgegenhaltungen:
- EP-A- 0 108 397
- EP-A- 0 379 386
- DE-A- 2 849 879

## Beschreibung

Die Erfindung betrifft eine lastabhängig steuerbare Bremskraftregelventileinrichtung für eine druckmittelbetätigte Fahrzeugbremsanlage gemäß dem Oberbegriff des Patentanspruchs 1.

Eine derartige aus der DE 32 09 247 C2 bekannte, von einem Druckmittel gesteuerte Bremskraftregelventileinrichtung wird in der Bremsanlage eines Motorfahrzeugs oder eines Anhängerfahrzeugs angeordnet, um den Druck in den Bremszylindern dem jeweiligen Beladungszustand des Fahrzeugs anzupassen. Die Anpassung erfolgt selbsttätig, indem ein Steuerkolben gegen die Kraft von zwei parallel geschalteten Federn ein Stellglied verschiebt, welches mit einem Einlaß- und Auslaßventil zusammenwirkt. Je nach Stellung des Steuerkolbens und somit je nach Stellung des mit dem Steuerkolben wirkverbundenen Stellgliedes wird von der Bremskraftregelventileinrichtung ein Druck ausgesteuert, der bei der gegebenen Beladung für die Abbremsung des Fahrzeugs erforderlich ist. Die Vorspannung der Federn läßt sich mittels zwei relativ zueinander verdrehbarer Schraubstücke verändern.

Bei dieser bekannten Bremskraftregelventileinrichtung sind die beiden Federn als Druckfedern ausgebildet und auf der dem Einlaß- und Auslaßventil der Bremskraftregelventileinrichtung abgewandten Seite des Steuerkolbens angeordnet. Bei einem Druckanstieg in der vom Steuerkolben begrenzten Druckmittelkammer der Bremskraftregelventileinrichtung, aufgrund einer höheren Beladung des Fahrzeugs, bewegt der Steuerkolben sich gegen die Kraft der Druckfedern vom Einlaß- und Auslaßventil weg. Das mit dem Steuerkolben wirkverbundene Stellglied wird dabei vom Steuerkolben in der gleichen Richtung mitgenommen. Damit der Abstand zwischen dem Einlaß- und Auslaßventil der Bremskraftregelventileinrichtung und der mit diesem zusammenwirkenden Seite des Stellgliedes dabei nicht größer wird, was dazu führen würde, daß die Bremskraftregelventileinrichtung bei voll beladenem Fahrzeug einen niedrigeren Druck als bei leerem Fahrzeug aussteuert, ist das Stellglied durch das Ventilschließglied des Einlaß- und Auslaßventils hindurch geführt und an seinem Ende mit einem Auslaßsitz versehen, der mit dem Ventilschließglied das Auslaßventil des Einlaß- und Auslaßventils bildet.

Das Ventilschließglied muß zu diesem Zweck in besonderer Art und Weise ausgebildet sein und es muß ein Dichtelement zwischen Stellglied und Ventilschließglied angeordnet werden.

Will man eine solche relativ aufwendige Ausbildung des Ventils vermeiden und ordnet deshalb die Druckfedern auf der dem Einlaß- und Auslaßventil zugewandten Seite des Steuerkolbens an, so daß bei einem Druckanstieg in der Druckmittelkammer der Steuerkolben und somit auch das Stellglied in Richtung auf das Einlaß- und Auslaßventil zu verschoben wird, kann ein einfaches Einlaßund Auslaßventil verwendet werden, welches keine Durchgangsöffnung im Ventilschließglied zum Hindurchführen des Stellgliedes benötigt.

Die Anordnung der Druckfedern auf der dem Einlaß- und Auslaßventil zugewandten Seite des Steuerkolbens hat jedoch den Nachteil, daß die Vorspannung der Federn nur dann verändert werden kann, wenn das Gehäuse der Bremskraftregelventileinrichtung geöffnet und der Steuerkolbens herausgenommen wird. Eine Einstellmöglichkeit für die Federvorspannung und gegebenenfalls für die Federkonstante von außen wäre bei einer solchen Anordnung der Druckfedern nur schwer zu realisieren.

Aus der DE-A-28 49 879 ist eine lastabhängig steuerbare Bremskraftregelventileinrichtung bekannt, die ein in einem Gehäuse angeordnetes kombiniertes Einlass- und Auslassventil aufweist, welches mittels eines Bremsdruckregelkolbens betätigbar ist. Die Regelgrösse der Bremskraftregelventileinrichtung von Leerlast bis Vollast ist mittels eines Stellgliedes einstellbar. Zum lastabhängigen Verstellen des Stellgliedes dient ein Steuerkolben, der von einem Druckmittel gegen die Kraft einer Druckfeder bewegbar ist. Zum Einstellen der Vorspannung der Druckfeder ist eine Einstelleinrichtung vorgesehen, welche ein Einstellelement und ein Halteelement aufweist. Das Einstellelement wird von einer koaxial zum Steuerkolben und zur Druckfeder angeordneten, in eine Gewindebohrung des Gehäuses eingedrehten Schraube und einem in die Windungen der Druckfeder eingedrehten Halteelement für die Druckfeder gebildet. Das Halteelement besteht aus einem zylindrischen Körper, der auf seinem Umfang mit einem Gewinde versehen ist. Die Druckfeder ist zwischen dem Steuerkolben und der Einstelleinrichtung so angeordnet, dass sie sich mit ihrem einen Ende über das Halteelement am Einstellelement abstützt und mit ihrem anderen Ende den Steuerkolben beaufschlagt. Durch Verdrehen des als Schraube ausgebildeten Einstellelementes in Richtung auf den Steuerkolben zu oder in Richtung vom Steuerkolben weg wird die Vorspannung der Druckfeder erhöht oder verringert. Soll die Federkonstante der Druckfeder verändert werden, so wird das Gehäuseteil, in welches die als Einstellelement dienende Schraube eingedreht ist, vom Gehäuse der Bremskraftregelventileinrichtung gelöst und die Druckfeder aus dem Gehäuse herausgenommen. Dann wird das Halteelement durch Drehen um seine Längsachse in der Druckfeder verschoben. Anschließend wird die Druckfeder wieder in das Gehäuse eingesetzt und die die Druckfeder aufnehmende Gehäuseöffnung mittels des das Einstellelement tragenden Gehäuseteiles verschlossen.

Bei dieser Bremskraftregelventileinrichtung wird die Federvorspannung der Druckfeder von außen durch Drehen des von der Schraube gebildeten Einstellelementes verändert. Zum Verändern der Federkonstante der Druckfeder muß die Druckfeder jedoch ausgebaut werden.

Der Erfindung liegt deshalb die Aufgabe zugrunde, eine Bremskraftregelventileinrichtung der vorstehend erwähnten Art zu schaffen, bei welcher mit einfachen Mitteln Einstellungen an der mit dem Steuerkolben zusammenwirkenden Feder vorgenommen werden können, ohne den Steuerkolben demontieren zu müssen.

Diese Aufgabe wird mit den in den Patentansprüchen 1, 2 und 3 angegebenen Ausführungen der Erfindung gelöst. Weiterbildungen und vorteilhafte Ausgestaltungen der Erfindung sind in den Unteransprüchen angegeben.

Die Erfindung bietet insbesondere den Vorteil, mit einfachen Mitteln die Federvorspannung oder/und die Federkonstante der Regelfeder der Bremskraftregelventileinrichtung einstellen zu können, ohne dabei Teile der Bremskraftregelventileinrichtung ausbauen zu müssen.

Dadurch, daß die Regelfeder als Zugfeder ausgebildet ist, kann auf Führungsmittel für die Regelfeder verzichtet werden. Der Windungsdurchmesser der Regelfeder kann klein gehalten und die axiale Erstreckung der Regelfeder kann relativ groß gewählt werden, da ein Ausknicken der Regelfeder, wie es bei einer als Druckfeder ausgebildeten Regelfeder passieren kann, ausgeschlossen ist.

Gemäß einer vorteilhaften Weiterbildung des Erfindungsgegenstandes greift ein die Regelfeder haltendes Klemmstück in die Windungen der Regelfeder ein, wobei das Klemmstück so ausgebildet ist, daß es über ein stößelartiges Teil um seine Längsachse drehbar ist, so daß durch Verdrehen des Klemmstückes die wirksame Federlänge und somit die Federkonstante der Regelfeder einstellbar ist.

Vorteilhafterweise sind in bzw. an einem Einstellelement zum Verändern der Vorspannung der Regelfeder elastisch verformbare Mittel angeordnet, die gegen eine Führung für das Einstellelement gedrückt werden und so Sicherungsmittel für das Einstellelement bilden, die ein selbsttätiges ungewolltes Verstellen des Einstellelementes verhindern, jedoch eine gewollte Verdrehbewegung des Einstellelementes relativ zur Führung zwecks Durchführung eines Einstellvorganges zulassen, ohne daß diese Sicherungsmittel entfernt oder mittels eines Werkzeugs gelöst werden müssen.

Durch die besondere Ausbildung der ersten Einstelleinrichtung zum Einstellen der Federvorspannung und einer zweiten Einstelleinrichtung zum Einstellen der Federkonstanten und das Zusammenfassen dieser beiden Einrichtungen zu einer Baueinheit ist es möglich geworden, den Bauteileaufwand sehr niedrig zu halten. Das Halteelement für die Regelfeder z.B. ist sowohl ein Teil der ersten Einstelleinrichtung als auch ein Teil der zweiten Einstelleinrichtung. Es können so mit einfachen Mitteln sowohl die Vorspannung als auch die Federkonstante der Regelfeder eingestellt werden, ohne daß Teile der Bremskraftregelventileinrichtung demontiert werden müssen.

In vorteilhafter Weise sind bei der erfindungsgemäßen Regelventileinrichtung der Bremsdruckregelkolben, das Einlaß- und Auslaßventil, das Stellglied, der Steuerkolben, die Regelfeder und die Einstellrichtung bzw. die Einstellrichtungen gleichachsig oder annähernd gleichachsig zueinander angeordnet.

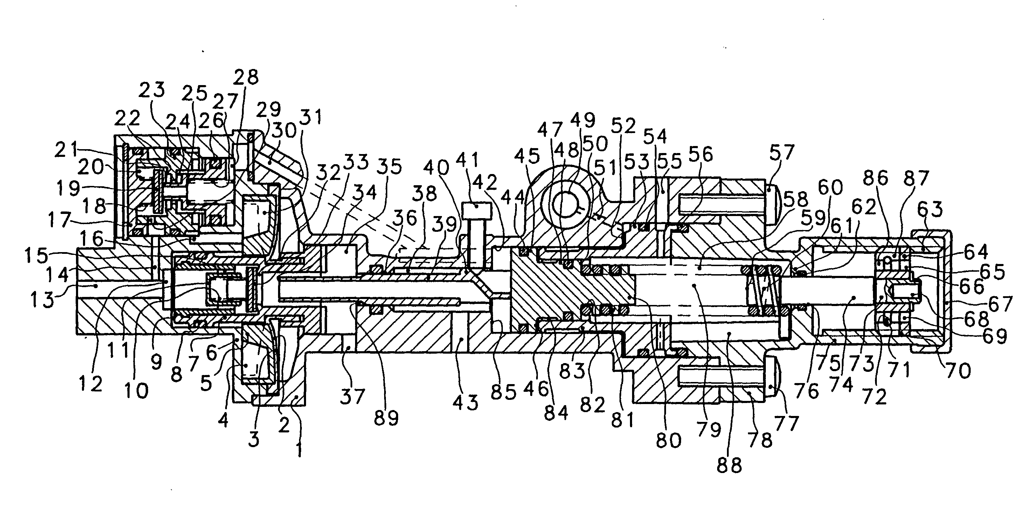

Anhand der Zeichnung wird die Erfindung nachstehend näher erläutert.

Die Abbildung zeigt eine von einem Druckmittel gesteuerte Bremskraftregelventileinrichtung mit einer Einrichtung zum Einstellen der Vorspannung und der Federkonstanten der Regelfeder der Bremskraftregelventileinrichtung.

Die in der Abbildung dargestellte Bremskraftregelventileinrichtung besitzt ein aus einem ersten Gehäuseteil (1), einem zweiten Gehäuseteil (6) und einem dritten Gehäuseteil (78) bestehendes Gehäuse (1, 6, 78), in welchem ein als Stufenkolben ausgebildeter Bremsdruckregelkolben (7, 3), der aus einem als Hohlkolben ausgebildeten Kolben (7) und einer mit diesem verbundenen Membran (3) besteht, in Richtung der Längsachse des Gehäuses (1, 6, 78) bewegbar angeordnet. Die Membran (3) ist mit ihrem äußeren Randbereich zwischen dem ersten Gehäuseteil (1) und dem zweiten Gehäuseteil (6) eingespannt. Der Kolben (7) ist in einer Gehäuseausnehmung mittels eines Dichtringes (8) abgedichtet verschiebbar angeordnet. Im Hohlraum des Kolbens (7) ist ein Einlaßsitz (32) angeordnet, der mit einem ebenfalls im Hohlraum des Kolbens (7) angeordneten Ventilschließglied (33) ein Einlaßventil (32, 33) eines kombinierten Einlaß- und Auslaßventils (32, 33, 34) für die Bremskraftregelventileinrichtung bildet. Das Ventilschließglied (33) wird von einer Feder (10) in Richtung auf den Einlaßsitz (32) zu beaufschlagt und an diesem gehalten. Mit ihrem dem Ventilschließglied (33) abgewandten Ende stützt die Feder (10) sich an einem im Kolben (7) angeordneten topfförmigen Teil (11) ab, welches über Stege (15) mit dem Kolben (7) verbunden ist. An dem Kolben (7) sind mehrere sich radial nach außen, vom Kolben (7) weg erstreckende Rippen (4) angeordnet, deren der Membran zugewandte Stirnflächen Teile eines Kegelmantels bilden. Im Gehäuse (1, 6, 78) ist ein Einlegering fest angeordnet, der mehrere sich radial nach innen erstrekkende Rippen (5) aufweist, in deren Zwischenräume die Rippen (4) des Kolbens (7) berührungslos eingreifen und deren der Membran (3) zugewandten Stirnflächen Teile eines entgegengesetzt verlaufenden Kegelmantels bilden. Der Bremsdruckregelkolben (7, 3) weist so eine konstante Wirkfläche (9) und eine unter der Bewegung des Bremsdruckregelkolbens (7, 3) veränderliche Wirkfläche (2) auf.

An dem zweiten Gehäuseteil (6) des Gehäuses (1, 6, 78) der Bremskraftregelventileinrichtung ist seitlich ein Vorsteuerventil angeordnet, welches ein einstückig mit dem Gehäuse (1, 6, 78) der Bremskraftregelventileinrichtung ausgebildetes Gehäuse aufweist. Das Gehäuse wird von einem Deckel (17) verschlossen, wobei zwischen Deckel (17) und Gehäuse ein Dichtring angeordnet ist.

Im Gehäuse des Vorsteuerventils ist ein als Hohlkolben ausgebildeter Vorsteuerkolben (25) mittels eines Dichtringes (26) abgedichtet in Richtung der Längsachse des Gehäuses bewegbar angeordnet. Der Vorsteuerkolben (25) trägt einen Auslaßsitz (21), der mit einem im Gehäuse geführten Ventilschließglied (19) ein Auslaßventil (21, 19) eines kombinierten Einlaß- und Auslaßventil (22, 21, 19) bildet. Mit einem gehäusefesten Einlaßsitz (22) bildet das Ventilschließglied (19) ein Einlaßventil (19, 22) des kombinierten Einlaß- und Auslaßventils (22, 21, 19). Der ringförmige Einlaßsitz (22) ist in einem Gehäuseeinsatz (23) des Vorsteuerventils angeordnet, welcher mittels eines auf seinem Umfang angeordneten Dichtringes abgedichtet im Gehäuse des Vorsteuerventils angeordnet ist. Eine Feder (27), die sich mit ihrem einen Ende am Gehäuse abstützt, beaufschlagt mit ihrem anderen Ende den Vorsteuerkolben (25) in Richtung auf das Ventilschließglied (19) zu und hält den Auslaßsitz (21) am Ventilschließglied (19). Das Einlaßventil (22, 19) befindet sich dabei in seiner Offenstellung. Das Ventilschließglied (19) wird von einer weiteren Feder (18), die sich am Deckel (17) abstützt, in Richtung auf den Auslaßsitz (21) und den Einlaßsitz (22) zu beaufschlagt. Über das kombinierte Einlaß- und Auslaßventil (22, 21, 19) ist eine Vorsteuerkammer (24) des Vorsteuerventils in Abhängigkeit von der Stellung des Vorsteuerkolbens (25) mit einer Eingangskammer (20) oder mit einer Auslaßkammer (28) des Vorsteuerventils verbindbar oder gegen beide absperrbar. Die Eingangskammer (20) des Vorsteuerventils ist über eine in der Wand des Gehäuseeinsatzes (23) angeordnete Durchgangsöffnung (29) und eine in der Wand des Gehäuseteiles (6) angeordnete Druckmittelleitung (14), die als Gehäusekanal ausgebildet ist, mit einem Steuereingang (13) der Bremskraftregelventileinrichtung verbunden. Der Steuereingang (13) steht mit einer Druckmitteleingangskammer (12) der Bremskraftregelventileinrichtung in Verbindung, die von der konstanten Wirkfläche (9) des Bremsdruckregelkolbens (7, 3) begrenzt wird. Über eine als Gehäusekanal ausgebildete weitere Druckmittelleitung (16) im Gehäuseteil (6) ist eine von der Membran (3) des Bremsdruckregelkolbens (7, 3) begrenzte Steuerkammer (31) mit der Vorsteuerkammer (24) verbunden. Von der der Steuerkammer (31) abgewandten Seite des Bremsdruckregelkolbens (7, 3) wird eine als Arbeitskammer dienende Druckmittelausgangskammer (35) der Bremskraftregelventileinrichtung begrenzt. Die Druckmittelausgangskammer (35) der Bremskraftregelventileinrichtung ist mit einem Druckmittelausgang (37) verbunden.

Im ersten Gehäuseteil (1) des Gehäuses (1, 6, 78) der Bremskraftregelventileinrichtung ist ein als lastabhängig verstellbares Stellglied (39) für die Bremskraftregelventileinrichtung dienender hohler Stößel in Richtung der Längsachse des Gehäuses (1, 6, 78) der Bremskraftregelventileinrichtung bewegbar angeordnet. Das Stellglied (39) ist an seinem dem Ventilschließglied (33) des kombinierten Einlaß- und Auslaßventils (32, 33, 34) zugewandten Ende als Auslaßsitz (34) ausgebildet und bildet mit dem Ventilschließglied (33) ein Auslaßventil (33, 34) des kombinierten Einlaß- und Auslaßventils (32, 33, 34).

Die Gehäusewand des ersten Gehäuseteiles (1) des Gehäuses (1, 6, 78) weist einen sich in Richtung auf das Stellglied (39) zu erstreckenden und das Stellglied (39) umgebenden ringförmigen Vorsprung auf, der als Führung (36) für das Stellglied (39) dient. Die Führung (36) besitzt auf ihrer dem Stellglied (39) zugewandten Seite eine umlaufende Nut, in welcher ein Dichtring angeordnet ist, der an der äußeren Mantelfläche des Stellgliedes (39) dichtend anliegt. Der Dichtring dichtet die Druckmittelausgangskammer (35) und eine als Entlüftungsraum (38) dienende Kammer gegeneinander ab. Der Entlüftungsraum (38) ist über eine als Druckmittelauslaß (43) dienende Durchgangsöffnung in der Wand des ersten Gehäuseteiles (1) mit einer Druckmittelsenke, z.B. mit der Atmosphäre verbunden. Eine im Gehäuse (1, 6, 78) angeordnete, als Gehäusekanal ausgebildete Druckmittelleitung (30) verbindet die Auslaßkammer (28) des Vorsteuerventils mit dem Entlüftungsraum (38).

Das erste Gehäuseteil (1) der Bremskraftregelventileinrichtung weist eine in Richtung der Längsachse des Gehäuses (1, 6, 78) verlaufende und sich zum freien Ende des Gehäuses (1, 6, 78) hin erweiternde abgestufte Öffnung (42) auf. In der Öffnung (42) ist eine Antriebseinrichtung für das Stellglied (39) angeordnet.

Die Antriebseinrichtung besitzt einen abgestuft ausgebildeten Steuerkolben (45, 47), der in dem den kleineren Durchmesser aufweisenden Bereich der abgestuften Öffnung (42) in Richtung der Längsachse des Gehäuses (1, 6, 78) bewegbar angeordnet ist. In die abgestufte Öffnung (42) ist ein ebenfalls abgestuft ausgebildeter rohrförmiger Körper (53, 83) so eingesetzt, daß er mit seiner Stufe an einer Stufe (52) der abgestuften Öffnung (42) anliegt und sein den geringeren Durchmesser aufweisender Bereich (83) sich auf den Steuerkolben (45, 47) zu erstreckt. Der Steuerkolben (45, 47) und der rohrförmige Körper (53, 83) sind so ausgebildet und so zueinander angeordnet, daß der Steuerkolben (45, 47) sich mit seinem den kleineren Durchmesser aufweisenden Bereich (47) in den den kleineren Durchmesser aufweisenden Bereich (83) des rohrförmigen Körpers (53, 83) hineinerstreckt, wobei der Innendurchmesser des rohrförmigen Körpers (53, 83) und der Außendurchmesser des Steuerkolbens (45, 47) in diesem Bereich so bemessen sind, daß der Steuerkolbens (45, 47) mit seinem kleineren Durchmesser im rohrförmigen Körper (53, 83) und mit seinem größeren Durchmesser in der Öffnung (42) des Gehäuses (1, 6, 78) gleitend geführt wird.

In einer Umfangsnut des den größeren Durchmesser aufweisenden Bereiches (45) des Steuerkolbens (45, 47) ist ein erster Dichtring (44) angeordnet, der dichtend an der die Öffnung (42) des Gehäuses (1, 6, 78) begrenzten Wand anliegt. Ein zweiter Dichring (48) ist in einer Umfangsnut des den kleineren Durchmesser aufweisenden Bereiches (47) des Steuerkolbens (45, 47) angeordnet und liegt dichtend an der Wand des rohrförmigen Körpers (53, 83) an. In einer Umfangsnut des den größeren Durchmesser aufweisenden Bereiches (53) des rohrförmigen Körpers (53, 83) ist ein weiterer Dichtring (54) angeordnet, der dichtend an der die Öffnung (42) des Gehäuses (1, 6, 78) begrenzten Wand anliegt. Die axiale Erstreckung des rohrförmigen Körpers (53, 83) in Richtung auf den Steuerkolben (45, 47) zu und die axiale Erstreckung des den kleineren Durchmesser aufweisenden Bereiches (47) des Steuerkolbens (45, 47) sind so bemessen und der zweite Dichtring (48) des Steuerkolbens (45, 47) ist so am Steuerkolben (45, 47) angeordnet, daß über den gesamten Hubbereich des Steuerkolbens (45, 47) der den zweiten Dichtring (48) tragende Bereich des Steuerkolbens (45, 47) im rohrförmigen Körper (53, 83) eingetaucht bleibt. Der Hub des Steuerkolbens (45, 47) wird in Richtung vom Stellglied (39) weg von der ihm zugewandten Stirnseite des rohrförmigen Körpers (53, 83) und in Richtung auf das Stellglied (39) zu von einer Schulter (85) des Gehäuses (1, 6, 78) begrenzt.

Die abgestufte Öffnung (42) des Gehäuses (1, 6, 78) wird von dem als Deckel ausgebildeten dritten Gehäuseteil (78) verschlossen, welches mittels Schrauben (57 und 77) lösbar mit dem ersten Gehäuseteil (1) verbunden ist. Das dritte Gehäuseteil (78) weist auf seiner dem ersten Gehäuseteil (1) zugewandten Seite einen zylindrisch ausgebildeten abgestuften Bereich auf, mit welchem es sich in die Öffnung (42) des Gehäuses (1, 6, 78) hineinerstreckt, wobei es an einer Stufe der ihm zugewandten Stirnseite des rohrförmigen Körpers (53, 83) anliegt. Ein Dichtring (56) ist zwischen einer Stufe des dritten Gehäuseteiles (78) und der dieser Stufe zugewandten stirnseitigen äußeren Ringfläche des rohrförmigen Körpers (53, 83) so angeordnet, daß er dichtend sowohl an der die Öffnung (42) des Gehäuses (1, 6, 78) begrenzenden Wand als auch an der dieser zugewandten Mantelfläche des dritten Gehäuseteiles (78) anliegt. Durch die Stufe (52) der die Öffnung (42) des Gehäuses (1, 6, 78) begrenzenden Wand und das dritte Gehäuseteil (78) wird der rohrförmige Körper (53, 83) gegen eine Bewegung in Richtung seiner Längsachse gesichert.

Der Steuerkolben (45, 47) besitzt eine ringförmie erste Wirkfläche (46), mit welcher er eine erste Druckmittelkammer (84) begrenzt und eine zweite Wirkfläche (50), mit welcher er eine zweite Druckmittelkammer (79) begrenzt. Die erste Druckmittelkammer (84) steht über eine als Gehäusekanal ausgebildete Druckmittelleitung (51) mit einem Druckmittelanschluß (49) und die zweite Druckmittelkammer (79) steht über eine als Gehäusekanal ausgebildete weitere Druckmittelleitung mit einem weiteren Druckmittelanschluß (55) des Gehäuses (1, 6, 78) in Verbindung. Über nichtdargestellte Druckmittelleitungen sind die beiden Druckmittelanschlüsse (49 und 55) mit zwei Druckmittelquellen, z.B. den Luftfederbälgen einer Fahrzeugachse, verbunden.

Auf der dem dritten Gehäuseteil (78) zugewandten Seite des Steuerkolbens (45, 47) ist am Steuerkolben (45, 47) zentrisch ein Fortsatz (80) angeordnet, der sich in Richtung auf eine Wand (61) des dritten Gehäuseteiles (78) zu erstreckt. Die Wand (61) besitzt eine zentrisch angeordnete Durchgangsöffnung (76), durch welche ein als Halteelement (74) für eine Regelfeder dienendes rotationssymmetrisch ausgebildetes stößelartiges Teil mittels eines in einer Nut der Wand (61) angeordneten Dichtringes (62) abgedichtet hindurchgeführt ist. Die Wand (61) trennt die zweite Druckmittelkammer (79) druckdicht von einem Raum, der in einem rohrförmigen Fortsatz (75) des dritten Gehäuseteiles (78) angeordnet ist. Das Halteelement (74) erstreckt sich einerseits in die Druckmittelkammer (79) und andererseits in den im rohrförmigen Fortsatz (75) gelegenen Raum hinein. Der freie Endbereich des sich in den Raum im rohrförmigen Fortsatz (75) hineinerstreckenden Halteelementes (74) ist abgestuft ausgebildet, wobei der den geringeren Durchmesser aufweisende Endbereich des Halteelementes (74) als Achsstummel (73) ausgebildet ist. Auf dem Achsstummel (73) ist ein als rotationssymmetrischer Körper ausgebildetes erstes Einstellelement (64) um seine Längsachse drehbar angeordnet. Gegen eine Bewegung in Richtung der Längsachse des Halteelementes (74) relativ zum Halteelement (74) ist das erste Einstellelement (64) durch die Stufe des Halteelementes (74) und einen dieser gegenüber, auf der anderen Seite des ersten Einstellelementes (64) am Achsstummel (73) angeordneten Sicherungsring (66) gesichert. Auf dem Umfang des ersten Einstellelementes (64) ist ein Gewinde (70) angeordnet, welches mit einem in der Wand des rohrförmigen Fortsatzes (75) angeordneten Gegengewinde (63) in Eingriff steht.

In das erste Einstellelement (64) ist von dessen der Wand (61) zugewandten Stirnseite her eine Ringnut (86) eingearbeitet, die sich über einen großen Teil der axialen Erstreckung des Einstellelementes (64) in dieses hineinerstreckt. Die die Ringnut (86) begrenzende äußere Wand des Einstellelementes (64) weist in Richtung der Längsachse des Einstellelementes (64) verlaufende Schlitze auf, welche die äußere Wand in eine Vielzahl von in radialer Richtung elastisch verformbaren Abschnitten unterteilen. Ein ebenfalls elastisch verformbarer ringförmiger Körper (71), z.B. ein Spreizring, ist unter Vorspannung in die Ringnut (86) eingesetzt und drückt die elastisch verformbaren Abschnitte (87) radial gegen die das Gegengewinde (63) aufweisende Wand des rohrförmigen Fortsatzes (75). Um den elastisch verformbaren ringförmigen Körper (71) in Richtung der Längsachse des ersten Einstellelementes (64) zu fxieren, ist in die elastisch verformbaren Abschnitte eine Vertiefung (72) eingearbeitet, in welche der ringförmige Körper (71) eingeschnappt ist. Der ringförmige Körper (71) und die elastisch verformbaren Abschnitte (87) dienen so als Sicherungsmittel gegen ein unbeabsichtigtes selbsttätiges Verdrehen des Einstellelementes (64).

An seinem sich in die zweite Druckmittelkammer (79) hineinerstreckenden anderen Ende weist das Halteelement (74) auf seinem Umfang ebenfalls ein Gewinde (60) auf. Dieser mit Gewinde (60) versehene, als Klemmstück (59) ausgebildete Endbereich des Halteelementes (74) dient als ein zweites Einstellelement (59, 60) für die Regelfeder.

Auf den Fortsatz (80) des Steuerkolbens (45, 47) ist eine als Regelfeder dienende Zugfeder (58) mit ihrem einen Ende aufgespannt, wobei die Federwindungen dieses Endes der Zugfeder (58) in die Gewindegänge (82) eines auf dem Umfang des Fortsatzes (80) angeordneten Gewindes (81, 82) eingreifen. In das andere Ende der Zugfeder (58) ist das zweite Einstellelement (59, 60) eingedreht. Das auf der Seite des stößelartigen Halteelementes (74) gelegene abgewinkelte Ende der Zugfeder (58) greift in eine in Richtung der Längsachse des Gehäuses (1, 6, 78) verlaufende, in der Wand des dritten Gehäuseteiles (78) angeordnete nutartige Vertiefung (88) ein, so daß die Zugfeder (58) gegen Verdrehen um ihre Längsachse gesichert ist. Die Zugfeder (58) ist somit in der vom Steuerkolben (45, 47) und der Wand (61) begrenzten Druckmittelkammer (79) gelegen.

Das erste Einstellelement (64) bildet mit dem Halteelement (74) eine erste Einstelleinrichtung (64, 74) zum Einstellen der Federvorspannung und das zweite Einstellelement (59, 60) bildet mit dem Halteelement (74) eine zweite Einstelleinrichtung (59, 60, 74) zum Einstellen der Federkonstanten der als Regelfeder dienenden Zugfeder (58).

In der dem Klemmstück (59) abgewandten Stirnseite des Halteelementes (74) ist eine Ausformung (68) angeordnet, die zur Aufnahme eines Werkzeugs dient. Die Ausformung kann z.B. sechseckig ausgebildet sein, so daß als Werkzeug ein handelsüblicher Sechskant-Inbusschlüssel verwendet werden kann. In der dem freien Ende des rohrförmigen Fortsatzes (75) des dritten Gehäuseteiles (78) zugewandten Seite des ersten Einstellelementes (64) sind mehrere Ausnehmungen (65, 69) angeordnet, welche ebenfalls zur Aufnahme eines Werkzeugs dienen. Die Ausnehmungen (65, 69) sind dabei so zueinander angeordnet, daß als Werkzeug ein Klauenschlüssel verwendet werden kann. Zum Einstellen der Federkonstanten wird ein Werkzeug verwendet, welches eine Relativbewegung zwischen dem ersten Einstellelement (64) und dem zweiten Einstellelement (59, 60) verhindert, so daß das erste Einstellelement (64) und das zweite Einstellelement (59, 60) synchron um ihre Längsachse gedreht werden können. Ein solches Werkzeug kann z.B. aus der Kombination eines Klauenschlüssels mit einem Inbusschlüssel bestehen.

Auf das freie Ende des rohrförmigen Fortsatzes (75) des dritten Gehäuseteiles (78) ist eine Kappe (67) aufgeschnappt, die das Eindringen von Schmutz und Feuchtigkeit in den Raum für das erste Einstellelement (64) verhindert.

In die Wand des Gehäuses (1, 6, 78) ist eine Schraube (41) eingedreht, an welcher das Stellglied (39) bei einer Bewegung in Richtung seiner Längsachse mit einem am Stellglied (39) angeordneten Vorsprung (40) zur Anlage bringbar ist. Die Schraube (41) dient als Anschlag, mittels welchem der Hub des Stellgliedes (39) in Richtung vom kombinierten Einlaß- und Auslaßventil (32, 33, 34) der Bremskraftregelventileinrichtung weg begrenzt wird.

Wie in der Abbildung deutlich erkennbar ist, sind der Bremsdruckregelkolben (3, 7), das Einlaß- und Auslaßventil (32, 33, 34), das Stellglied (39), der Steuerkolben (45, 47), die Zugfeder (58) und die beiden Einstelleinrichtungen (67, 74 und 59, 60, 74) gleichachsig zueinander und in Richtung der Längsachse des Gehäuses (1, 6, 78) bewegbar angeordnet, so daß im wesentlichen auch nur in Richtung ihrer Längsachse Kräfte auf diese Bauteile ausgeübt werden. Sowohl das am Fortsatz (80) des Steuerkolbens (45, 47) angeordnete Gewinde (81, 82) als auch das mit der Zugfeder (58) in Eingriff stehende Gewinde (60) des Halteelementes (74) kann durch sich radial nach außen erstreckende Vorsprünge am Fortsatz (80) bzw. am Halteelement (74) ersetzt werden. Das Halteelement (74) kann einen kreisförmigen oder einen von der Kreisform abweichenden, z. B. ovalen oder vieleckigen Querschnitt haben.

Die Funktion der im vorstehenden beschriebenen lastabhängig steuerbaren Bremskraftregelventileinrichtung wird nachfolgend näher erläutert.

Es wird angenommen, daß die Bremskraftregelventileinrichtung in der Bremsanlage eines luftgefederten Fahrzeugs angeordnet ist, wobei der Steuereingang (13) der Bremskraftregelventileinrichtung mit dem Ausgang eines Bremsventils, z.B. Motorwagenbremsventils, in Verbindung steht und der Druckmittelausgang (37) der Bremskraftregelventileinrichtung mit einem Bremsventil verbunden ist, welches einem Bremszylinder der Fahrzeugbremsanlage zugeordnet ist. Die Druckmittelanschlüsse (49 und 55) der Bremskraftregelventileinrichtung sind mit den Druckmittelkammern der Luftfederbälge einer Achse des Fahrzeugs verbunden. Bei nichtbeladenem Fahrzeug befinden sich das Stellglied (39) und der Steuerkolben (45, 47) der Bremskraftregelventileinrichtung in der in der Abbildung gezeigten Stellung.

Bei nichtbetätigter Bremse ist das Einlaßventil (32, 33) der Bremskraftregelventileinrichtung geschlossen und das Auslaßventil (34, 33) der Bremskraftregelventileinrichtung ist geöffnet. Das Einlaßventil (22, 19) des Vorsteuerventils ist geöffnet und das Auslaßventil (21, 19) des Vorsteuerventils ist geschlossen.

Wenn das Motorwagen-Bremsventil betätigt wird, gelangt der von diesem ausgesteuerte Bremssteuerdruck über den Steuereingang (13) in die Druckmitteleingangskammer (12)der Bremskraftregelventileinrichtung und gleichzeitig über die Druckmittelleitung (14) und das geöffnete Einlaßventil (22, 19) des Vorsteuerventils in die Vorsteuerkammer (24), von welcher der Bremssteuerdruck über die Druckmittelleitung (16) (Gehäusekanal) in die Steuerkammer (31) der Bremskraftregelventileinrichtung gelangt.

Bei Erreichen eines bestimmten, auf den Vorsteuerkolbenn (25) einwirkenden Bremssteuerdruckes, bewegt sich der Vorsteuerkolben (25) gegen die Kraft der Feder (27) in Richtung von der Vorsteuerkammer (24) weg, wodurch das Einlaßventil (22, 19) in seine Schließstellung gelangt.

Gleichzeitig mit den vorstehend beschriebenen Vorgängen wirkt der Bremssteuerdruck in der Steuerkammer (31) der Bremskraftregelventileinrichtung auf den aus dem Kolben (7) und der Membran (3) bestehenden Bremsdruckregelkolben (7, 3) wodurch sich dieser in Richtung auf die Druckmittelausgangskammer (35) der Bremskraftregelventileinrichtung zu bewegt. Die Membran (3) löst sich während dieser Bewegung des Kolbens (7) von den im Gehäuse (1, 6, 78) angeordneten Rippen (5) und legt sich im zunehmenden Maße an die Rippen (4) des Kolbens (7) an. Die wirksame Membranfläche wird so laufend vergrößert, bis sie die Fläche der Kolbenoberseite überwiegt. Dabei setzt das Ventilschließglied (33) des kombinierten Einlaß- und Auslaßventils (32, 33, 34) auf die als Auslaßsitz (34) ausgebildete Stirnfläche des Stellgliedes (39) auf, wenn der Bremsdruckregelkolben (7, 3) einen vorbestimmten Weg zurückgelegt hat. Das Auslaßventil (33, 34) ist dann geschlossen. Bei der weiteren Bewegung des Bremsdruckregelkolbens (7, 3) in derselben Richtung hebt das Stellglied (39) das Ventilschließglied (33) vom Einlaßsitz (32) ab. Das Einlaßventil (32, 33) ist dann geöffnet. Von der Eingangskammer (12) gelangt dann der Bremssteuerdruck durch das geöffnete Einlaßventil (32, 33) in die Druckmittelausgangskammer (35) und von dieser weiter durch den Druckmittelausgang (37) zu dem nachgeschalteten Verbraucher (z.B. Bremsventil).

Wenn die vom Druck in der Druckmittelausgangskammer (35) auf den Bremsdruckregelkolben (7, 3) ausgeübte Kraft gleich ist der vom Druck in der Steuerkammer (31) und vom Druck in der Druckmitteleingangskammer (12) auf den Bremsdruckregelkolben (7, 3) entgegengerichtet einwirkenden Kraft, bewegt der Bremsdruckregelkolben (7, 3) sich in Richtung auf die Steuerkammer (31) zu. Dabei gelangt das Einlaßventil (32, 33) in seine Schließstellung. Eine Abschlußstellung der Bremskraftregelventileinrichtung ist erreicht.

Soll der Bremsvorgang beendet werden, wird das Motorwagen-Bremsventil in seine entlüftende Stellung gebracht. Der Druck in der Druckmitteleingangskammer (12) der Bremskraftregelventileinrichtung baut sich über das Motorwagen-Bremsventil zur Atmosphäre hin ab. Aufgrund des sich abbauenden Druckes der Druckmmitteleingangskammer (12) der Bremskraftregelventileinrichtung bewegt der Bremsdruckregelkolben (7, 3) sich in Richtung auf die Steuerkammer (31) zu. Dabei gelangt das Auslaßventil (33, 34) der Bremskraftregelventileinrichtung in seine Offenstellung. Über das geöffnete Auslaßventil (33, 34), den als Stellglied (39) dienenden hohlen Stößel, eine Öffnung in der Wand des Stößels, den Entlüftungsraum (38) und den Druckmittelauslaß (43) wird der Druck in der Druckmittelausgangskammer (35) der Bremskraftregelventileinrichtung und somit auch der Druck im nachgeschalteten Verbraucher (Bremsventil) zur Atmosphäre hin abgebaut.

Bedingt durch den Druckabbau in der Druckmitteleingangskammer (12) gelangt auch das Einlaßventil (22, 19) des Vorsteuerventils in seine Offenstellung, so daß dann auch die Steuerkammer (31) der Bremskraftregelventileinrichtung über das geöffnete Einlaßventil (22, 19), die Druckmittelleitung (14), den Steuereingang (13) und das Motorwagen-Bremsventil mit der Atmosphäre verbunden ist.

Wird das Fahrzeug vollständig beladen, steigt der Druck in den zwischen dem Fahrzeugaufbau und der Fahrzeugachse angeordneten Luftfederbälge an. Die Bremskraftregelventileinrichtung stellt sich dann auf "Vollast" ein. Dies geschieht in der Weise, daß, bedingt durch den Druckanstieg in den Luftfederbälgen des Fahrzeugs, auch der Druck in den mit den Luftfederbälgen verbundenen Druckmittelkammern (84 und 79) der Bremskraftregelventileinrichtung ansteigt und der Steuerkolben (45, 47) vom ansteigenden Druck in den Druckmittelkammern (84 und 79) gegen die Kraft der Zugfeder (58) in Richtung auf das Einlaß- und Auslaßventil (32, 33, 34) zu verschoben wird.

Da der Steuerkolben (45, 47) mit dem Stellglied (39) der Bremskraftregelventileinrichtung in Wirkverbindung steht bzw. in Wirkverbindung bringbar ist, verschiebt er das Stellglied (39) in Richtung auf das kombinierte Einlaß- und Auslaßventil (32, 33, 34) der Bremskraftregelventileinrichtung zu. Die daraus resultierende Verringerung des Abstandes zwischen der dem kombinierten Einlaß- und Auslaßventil (32, 33, 34) zugewandten Seite des Stellgliedes (39) und dem kombinierten Einlaß- und Auslaßventil (32, 33, 34) wirkt sich dahingehend aus, daß der den Einlaßsitz (32) und das Ventilschließglied (33) tragende Bremsdruckregelkolben (7, 3) bei einem Bremsvorgang einen kürzeren Weg zurücklegt, bis das Auslaßventil (33, 34) in seine Schließstellung und das Einlaßventil (33, 32) in seine Offenstellung gelangt und somit nur ein Teilbereich der Membran (3) an den Rippen (4) des Kolbens (7) zur Anlage kommt. Die dadurch bewirkte Reduzierung der Wirkfläche (2) des Bremsdruckregelkolbens (7, 3) erfordert einen höheren Druck in der Druckmittelausgangskammer (35) der Bremskraftregelventileinrichtung, um den Bremsdruckregelkolben (7, 3) gegen die Kraft des Steuerdruckes in der Steuerkammer (31) und in der Druckmitteleingangskammer (12) wieder in eine Position zu bringen, in welcher das Einlaßventil (32, 33) geschlossen ist und somit eine Abschlußstellung der Bremskraftregelventileinrichtung erreicht ist. Der von der Bremskraftregelventileinrichtung ausgesteuerte und in das nachgeschaltete Bremsventil eingesteuerte höhere Druck bewirkt dann auch einen vom Bremsventil in die Bremszylinder eingesteuerten höheren Druck.

Wird das Fahrzeug entladen, sinkt der Druck in den Luftfederbälgen und somit auch in den Druckmittelkammern (84, 79) der Bremskraftregelventileinrichtung ab. Die von der Zugfeder (58) auf den Steuerkolben (55, 47) ausgeübte Kraft überwiegt gegenüber der vom Druck in den Druckmittelkammern (84 und 79) entgegengerichtet auf den Steuerkolben (45, 47) ausgeübten Kraft, wodurch der Steuerkolben (45, 47) in Richtung vom Stellglied (39) weg bewegt wird. Bei Beaufschlagung einer abgeschrägten Stufe (89) des Stellgliedes (39) mit Druckmittel folgt das Stellglied (39) dem Steuerkolben (45, 47). Dabei vergrößert sich der Abstand zwischen dem kombinierten Einlaß- und Auslaßventil (32, 33, 34) der Bremskraftregelventileinrichtung und der diesem zugewandten Stirnseite des Stellgliedes (39).

Das Zurückstellen des Stellgliedes (39) wird auch noch dadurch bewirkt, daß bei einer Bewegung des Bremsdruckregelkolbens (7, 3) in Richtung auf das Stellglied (39) zu das Stellglied (39) vom Ventilschließglied (33) des am Bremsdruckregelkolben (7, 3) angeordneten Einlaßund Auslaßventils (32, 33, 34) so weit zurückgeschoben wird, bis es am Steuerkolben (45, 47) oder einem mit diesem verbundenen Teil zur Anlage kommt.

Soll die Bremskraftregelventileinrichtung an andere Einsatzbedingungen für das Fahrzeug angepaßt und soll deshalb die Vorspannung und die Federkonstante der Zugfeder (58) verändert werden, so wird z.B. zuerst die Federkonstante und dann die Federvorspannung verändert.

Zum Einstellen der Federkonstanten wird, nachdem die Kappe (67) vom Gehäuse (1, 6, 78) entfernt worden ist, ein Kombiwerkzeug, welches aus einem Inbusschlüssel mit zusätzlichen Klauen besteht, in die Ausnehmungen (65, 69) der ersten Einstelleinrichtung (64, 74) und in die Ausformung (68) der zweiten Einstelleinrichtung (59, 60, 74) eingeführt. Dann wird das Kombiwerkzeug, je nachdem ob eine härtere oder eine weichere Einstellung der Zugfeder (58) gewünscht wird, im Uhrzeigersinn oder entgegen dem Uhrzeigersinn um die gemeinsame Drehachse von erster Einstelleinrichtung (64, 74) und zweiter Einstelleinrichtung (59, 60, 74) gedreht. In der einen Drehrichtung wird dabei das zweite Einstellelement (59, 60) der zweiten Einstelleinrichtung (59, 60, 74) weiter in die Zugfeder (58) eingedreht, wodurch der wirksame Federbereich der Zugfeder (58) verkürzt wird. In der anderen Drehrichtung wird das zweite Einstellelement (59, 60) weiter aus der Zugfeder (58) herausgedreht, wodurch der wirksame Federbereich der Zugfeder (58) vergrößert wird. Da synchron zur Drehbewegung der zweiten Einstelleinrichtung (59, 60, 74) eine Drehbewegung der ersten Einstelleinrichtung (64, 74) erfolgt, wird bei dem Einstellvorgang für die Federkonstante die Vorspannung der Zugfeder (58) nicht verändert. Voraussetzung ist jedoch, daß die Steigung der Zugfeder (58) und die Steigung des Gewindes (70) auf dem Umfang des ersten Einstellelementes (64) sowie die Steigung des Gegengewindes (63) in der Wand des rohrförmigen Fortsatzes (75) gleich sind.

Zum Einstellen der Vorspannung der Zugfeder (58) wird das Kombiwerkzeug durch einen einfachen Klauenschlüssel ersetzt, der mit seinen Klauen in die Ausnehmungen (65 und 69) des ersten Einstellelementes (64) eingeführt wird. Je nachdem, ob die Vorspannung der Zugfeder (58) erhöht oder verringert werden soll, wird der Klauenschlüssel und mit diesem das erste Einstellelement (64) um die Drehachse des ersten Einstellelementes (64) relativ zum zweiten Einstellelement (59, 60) im Uhrzeigersinn oder entgegen dem Uhrzeigersinn gedreht. Dabei wird das erste Einstellelement (64) tiefer in das Gehäuse (1, 6, 78) hinein oder weiter in Richtung aus diesem herausgedreht. Das über das stößelartige Halteelement (74) mit dem ersten Einstellelement (64) verbundene zweite Einstellelement (59, 60) wird dabei näher an den Steuerkolben (45, 47) herangebracht bzw. entfernt sich dabei von diesem. Bei einer Verringerung des Abstandes zwischen Steuerkolben (45, 47) und zweitem Einstellelement (59, 60) verringert sich die Vorspannung der Zugfeder (58) und bei einer Vergrößerung des Abstandes zwischen Steuerkolben (45, 47) und zweitem Einstellelement (59, 60) erhöht sich die Vorspannung der Zugfeder (58).

Es ist auch möglich, mit einem geeigneten Werkzeug, wie z.B. einem Inbusschlüssel, lediglich das Halteelement (74) mit zweitem Einstellelement (59, 60) relativ zum ersten Einstellelement (64) im Uhrzeigersinn oder entgegen dem Uhrzeigersinn zu drehen. Da sich dann keine Änderung des Abstandes zwischen Steuerkolben (45, 47) und zweitem Einstellelement (59, 60) ergibt, schraubt die Zugfeder (58) sich auf das zweite Einstellelement (59, 60), wodurch sich dann sowohl die Vorspannung als auch die Federkonstante der Zugfeder (58) ändert.

Nach erfolgten Einstellvorgängen wird die Kappe (67) wieder auf das Gehäuse (1, 6, 78) aufgesetzt.

Das zweite Einstellelement (59, 60) kann, wie im Vorstehenden beschrieben, einstückig mit dem stößelartigen Halteelement (74) ausgebildet sein. Es ist jedoch gemäß der Erfindung auch möglich, das zweite Einstellelement (59, 60) als ein separates Bauteil auszubilden und dieses dann mit dem stößelartigen Teil (74) zu verbinden.

Gemäß der beanspruchten Erfindung kann, wenn auf die Einstellbarkeit der Federvorspannung verzichtet wird, das dem Einstellelement (59, 60) zum Einstellen der Federkonstante abgewandte Ende des Halteelementes (74) drehfest mit einem ein Gewinde tragenden Bauteil verbunden sein, wobei dieses Bauteil dann so ausgebildet ist, daß sein Gewinde mit dem in der Wand des Gehäuses (1, 6, 78) angeordneten Gegengewinde in Eingriff steht. Ebenso ist es möglich, wenigstens den dem Einstellelement (59, 60) abgewandten Endbereich des Halteelementes (74) mit Gewinde zu versehen, welches dann mit einem Gegengewinde in der Wand des Gehäuses (1, 6, 78) in Eingriff steht.

Soll dagegen nur die Möglichkeit gegeben sein, die Federvorspannung einstellen zu können, kann auf das zweite Einstellelement (59, 60) verzichtet werden. Die Zugfeder (58) kann dann auch auf eine andere Art und Weise am Halteelement (74) befestigt sein.

Es ist gemäß der Erfindung auch möglich, sowohl die Einstelleinrichtung zum Einstellen der Federvorspannung als auch die Einstelleinrichtung zum Einstellen der Federkonstanten dadurch zu vereinfachen, daß der aus dem vom Steuerkolben (45, 47) und der Wand (61) begrenzten Raum durch eine Durchgangsöffnung (76) in der Wand (61) herausgeführte Bereich des Halteelementes (74) wenigstens auf einem Teil seiner axialen Erstreckung mit Gewinde versehen wird und auf diesen Bereich des Halteelementes (74) eine als ein Einstellelement dienende Mutter aufgeschraubt wird, die sich an der Wand (61) des Gehäuses (1, 6, 78) abstützt und mittels einer Kontermutter gegen unbeabsichtigtes Verdrehen gesichert wird. Auf einen mit einem Gegengewinde versehenen rohrförmigen Fortsatz des Gehäuses (1, 6, 78) kann dann verzichtet werden. Wird auf eine Einstellmöglichkeit für die Federkonstante verzichtet, kann das zweite Einstellelement durch eine einfacher ausgebildete Halterung für die Zugfeder ersetzt werden.

## Patentansprüche

1. Lastabhängig steuerbare Bremskraftregelventileinrichtung für eine druckmittelbetätigte Fahrzeugbremsanlage, mit folgenden Merkmalen:
a) im Gehäuse (1, 6, 78) der Bremskraftregelventileinrichtung sind ein Einlassventil (32, 33) und ein Auslassventil (33, 34) angeordnet;
b) zur Betätigung des Einlassventils (32, 33) und des Auslassventils (33, 34) dient ein im Gehäuse (1, 6, 78) angeordneter Bremsdruckregelkolben (7, 3);
c) die Regelgröße der Bremskraftregelventileinrichtung von Leerlast bis Vollast ist mittels eines im Gehäuse (1, 6, 78) angeordneten lastabhängig verstellbaren Stellgliedes (39) einstellbar;
d) zum lastabhängigen Verstellen des Stellgliedes (39) dient ein Steuerkolben (45, 47), der von einem Druckmittel gegen die Kraft einer Feder bewegbar ist;
e) es ist eine Einstelleinrichtung (64, 74) für die Feder vorgesehen;
f) die Feder steht mit der Einstelleinrichtung (64, 74) in Wirkverbindung;
g) die Einstelleinrichtung (64, 74) dient zum Einstellen der Vorspannung der Feder und besitzt ein Einstellelement (64) und ein mit diesem zusammenwirkendes Halteelement (74) für die Feder;
**gekennzeichnet durch** die folgenden Merkmale:
h) die Feder ist als Zugfeder (58) ausgebildet und mit ihrem einen Ende an der dem Stellglied (39) abgewandten Seite des Steuerkolbens (45, 47) am Steuerkolben (45, 47) oder an einem mit dem Steuerkolben (45, 47) verbundenen Teil befestigt;
i) das andere Ende der Zugfeder (58) ist mit der Einstelleinrichtung (64, 74) verbunden;
k) das Einstellelement (64) und das Halteelement (74) für die Zugfeder (58) sind miteinander verbunden;
l) das Einstellelement (64) und/oder das Halteelement (74) ist zum Einstellen der Vorspannung der Zugfeder (58) in Richtung auf den Steuerkolben (45, 47) zu bzw. in Richtung vom Steuerkolben (45, 47) weg verstellbar;

2. Lastabhängig steuerbare Bremskraftregelventileinrichtung für eine druckmittelbetätigte Fahrzeugbremsanlage, mit folgenden Merkmalen:
a) im Gehäuse (1, 6, 78) der Bremskraftregelventileinrichtung sind ein Einlassventil (32, 33) und ein Auslassventil (33, 34) angeordnet;
b) zur Betätigung des Einlassventils (32, 33) und des Auslassventils (33, 34) dient ein im Gehäuse (1, 6, 78) angeordneter Bremsdruckregelkolben (7, 3);
c) die Regelgröße der Bremskraftregelventileinrichtung von Leerlast bis Vollast ist mittels eines im Gehäuse (1, 6, 78) angeordneten lastabhängig verstellbaren Stellgliedes (39) einstellbar;
d) zum lastabhängigen Verstellen des Stellgliedes (39) dient ein Steuerkolben (45, 47), der von einem Druckmittel gegen die Kraft einer Feder bewegbar ist;
e) es ist eine Einstelleinrichtung (74, 59, 60) für die Feder vorgesehen;
f) die Feder steht mit der Einstelleinrichtung (74, 59, 60) in Wirkverbindung;
g) die Einstelleinrichtung (74, 59, 60) dient zum Einstellen der Federkonstanten der Feder und besitzt ein Einstellelement (59, 60) und ein mit diesem zusammenwirkendes Halteelement (74) für die Feder, wobei das Einstellelement (59, 60) zum Einstellen der Federkonstanten der Feder mit der Feder verbunden ist, derart, dass es in den Windungen der Feder durch Drehen verschiebbar ist; **gekennzeichnet durch** die folgenden Merkmale:
h) die Feder ist als Zugfeder (58) ausgebildet und mit ihrem einen Ende an der dem Stellglied (39) abgewandten Seite des Steuerkolbens (45, 47) am Steuerkolben (45, 47) oder an einem mit dem Steuerkolben (45, 47) verbundenen Teil befestigt;
i) das andere Ende der Zugfeder (58) ist mit der Einstelleinrichtung (59, 60, 74) verbunden;
k) das Einstellelement (59, 60) und das Halteelement (74) für die Zugfeder (58) sind miteinander verbunden.

3. Lastabhängig steuerbare Bremskraftregelventileinrichtung für eine druckmittelbetätigte Fahrzeugbremsanlage, mit folgenden Merkmalen:
a) im Gehäuse (1, 6, 78) der Bremskraftregelventileinrichtung sind ein Einlassventil (32, 33) und ein Auslassventil (33, 34) angeordnet;
b) zur Betätigung des Einlassventils (32, 33) und des Auslassventils (33, 34) dient ein im Gehäuse (1, 6, 78) angeordneter Bremsdruckregelkolben (7, 3);
c) die Regelgröße der Bremskraftregelventileinrichtung von Leerlast bis Vollast ist mittels eines im Gehäuse (1, 6, 78) angeordneten lastabhängig verstellbaren Stellgliedes (39) einstellbar;
d) zum lastabhängigen Verstellen des Stellgliedes (39) dient ein Steuerkolben (45, 47), der von einem Druckmittel gegen die Kraft einer Feder bewegbar ist;
e) es ist eine Einstelleinrichtung für die Feder vorgesehen;
f) die Feder steht mit der Einstelleinrichtung in Wirkverbindung;
g) die Einstelleinrichtung dient als eine erste Einstelleinrichtung (64, 74), mittels welcher die Vorspannung der Feder einstellbar ist;
h) die erste Einstelleinrichtung (64, 74) besitzt ein erstes Einstellelement (64) und ein mit diesem wirkverbundenes Halteelement (74) für die Feder;
i) es ist eine zweite Einstelleinrichtung (59, 60, 74) vorgesehen, mittels welcher die Federkonstante der Feder einstellbar ist;
k) die zweite Einstelleinrichtung (59, 60, 74) weist ein zweites Einstellelement (59, 60) auf, welches mit der Feder verbunden ist, derart, dass es in den Windungen der Feder durch Drehen verschiebbar ist;
**gekennzeichnet durch** die folgenden Merkmale:
l) die Feder ist als Zugfeder (58) ausgebildet und mit ihrem einen Ende an der dem Stellglied (39) abgewandten Seite des Steuerkolbens (45, 47) am Steuerkolben (45, 47) oder an einem mit dem Steuerkolben (45, 47) verbundenen Teil befestigt;
m) das andere Ende der Zugfeder (58) ist mit der Einstelleinrichtung (64, 74) verbunden;
n) das erste Einstellelement (64) und/oder das Halteelement (74) ist zum Einstellen der Vorspannung der Zugfeder (58) in Richtung auf den Steuerkolben (45, 47) zu bzw. in Richtung vom Steuerkolben (45, 47) weg verstellbar;
o) die zweite Einstelleinrichtung (59, 60, 74) wird von dem Halteelement (74) der ersten Einstelleinrichtung (64, 74) und dem zweiten Einstellelement (59, 60) gebildet, wobei das zweite Einstellelement (59, 60) an dem dem ersten Einstellelement (64) abgewandten Endbereich des Halteelementes (74) am Halteelement (74) angeordnet ist.

4. Lastabhängig steuerbare Bremskraftregelventileinrichtung nach Anspruch 1, **gekennzeichnet durch** die folgenden Merkmale:
a) das Haltelement (74) ist als ein stößelartiges Teil ausgebildet;
b) das Einstellelement (64) ist als ein rotationssymmetrischer Körper ausgebildet;
c) der rotationssymmetrische Körper ist an dem der Zugfeder (58) abgewandten Ende des stößelartigen Teiles um die Längsachse des stößelartigen Teiles drehbar, und gegen eine Bewegung in Richtung der Längsachse des stößelartigen Teiles relativ zum stößelartigen Teil gesichert am stößelartigen Teil angeordnet;
d) auf dem Umfang des rotationssymmetrischen Körpers ist ein Gewinde (70) angeordnet, welches in ein in der Wand des Gehäuses (1, 6, 78) angeordnetes Gegengewinde (63) eingreift;
e) die Einstelleinrichtung (64, 74) wirkt derart mit der Zugfeder (58) zusammen, daß durch Drehen des rotationssymmetrischen Körpers um seine Längsachse in der einen Drehrichtung das stößelartige Teil und/oder der rotationssymmetrische Körper sich in Richtung auf den Steuerkolben (45, 47) zu bewegen, wodurch der von der Zugfeder (58) überbrückte Abstand zwischen dem Steuerkolben (45, 47) und dem stößelartigen Teil sich im Sinne einer Verringerung der Federvorspannung der Zugfeder (58) verringert und durch Drehen des rotationssymmetrischen Körpers um seine Längsachse in der anderen Drehrichtung das stößelartige Teil und/oder der rotationssymmetrische Körper sich in Richtung vom Steuerkolben (45, 47) weg bewegen, wodurch der Abstand zwischen dem Steuerkolben (45, 47) und dem stößelartigen Teil sich im Sinne einer Erhöhung der Federvorspannung vergrößert.

5. Lastabhängig steuerbare Bremskraftregelventileinrichtung nach Anspruch 2, **gekennzeichnet durch** die folgenden Merkmale:
a) das Halteelement (74) ist als ein stößelartiges Teil ausgebildet;
b) das Einstellelement wird von dem der Zugfeder (58) zugewandten Endbereich des stößelartigen Teiles gebildet, wobei auf dem Umfang dieses Endbereiches des stößelartigen Teiles sich radial nach außen erstreckende Vorsprünge angeordnet sind, die in die Windungen der Zugfeder (58) eingreifen;
c) auf dem Umfang des stößelartigen Teiles oder auf dem Umfang eines mit dem stößelartigen Teil verbundenen rotationssymmetrischen Körpers ist ein Gewinde angeordnet, welches in ein in der Wand des Gehäuses (1, 6, 78) angeordnetes Gegengewinde eingreift;
d) die Einstelleinrichtung (59, 50, 74) ist derart mit der Zugfeder (58) wirkverbunden, daß bei einer Drehbewegung der Einstelleinrichtun (59, 60, 74) um ihre Drehachse in der einen Drehrichtung das Einstellelement (59, 60) im Sinne einer Verringerung der Anzahl der wirksamen Federwindungen der Zugfeder (58) weiter in die Zugfeder (58) hineingedreht wird, wobei das stößelartige Teil und das Einstellelement (59, 60) sich in Richtung auf den Steuerkolben (45, 47) zu bewegen und bei einer Drehbewegung der Einstelleinrichtung (59, 60, 74) in der anderen Drehrichtung das Einstellelement (59, 60) im Sinne einer Erhöhung der Anzahl der wirksamen Federwindungen der Zugfeder (58) weiter aus der Zugfeder (58) herausgedreht wird, wobei das stößelartige Teil und das Einstellelement (59, 60) sich in Richtung vom Steuerkolben (45, 47) weg bewegen.

6. Lastabhängig steuerbare Bremskraftregelventileinrichtung nach Anspruch 3, **gekennzeichnet durch** die folgenden Merkmale:
a) das Halteelement (74) ist als ein stößelartiges Teil ausgebildet;
b) das erste Einstellelement (64) ist als ein rotationssymmetrischer Körper ausgebildet;
c) der rotationssymmetrische Körper ist an dem der Zugfeder (58) abgewandten Ende des stößelartigen Teiles um die Längsachse des stößelartigen Teiles drehbar und gegen eine Bewegung in Richtung der Längsachse des stößelartigen Teiles relativ zum stößelartigen Teil gesichert am stößelartigen Teil angeordnet;
d) auf dem Umfang des rotationssymmetrischen Körpers ist ein Gewinde (70) angeordnet, welches in ein in der Wand des Gehäuses (1, 6, 78) angeordnetes Gegengewinde (63) eingreift;
e) das zweite Einstellelement wird von dem der Zugfeder (58) zugewandten Endbereich des stößelartigen Teiles gebildet, wobei auf dem Umfang dieses Endbereiches des stößelartigen Teiles sich radial nach außen erstreckende Vorsprünge angeordnet sind, die in die Windungen der Zugfeder (58) eingreifen;
f) die erste Einstelleinrichtung (64, 74) wirkt derart mit der Zugfeder (58) zusammen, daß durch Drehen des rotationssymmetrischen Körpers um seine Längsachse in der einen Drehrichtung der rotationssymmetrische Körper und das stößelartige Teil sich in Richtung auf den Steuerkolben (45, 47) zu bewegen, wodurch sich der von der Zugfeder (58) überbrückte Abstand zwischen dem Steuerkolben (45, 47) und dem stößelartigen Teil im Sinne einer Verringerung der Federvorspannung der Zugfeder (58) verringert und durch Drehen des rotationssymmetrischen Körpers um seine Längsachse in der anderen Drehrichtung der rotationssymmetrische Körper und das stößelartige Teil sich in Richtung vom Steuerkolben (45, 47) weg bewegen, wodurch sich der Abstand zwischen dem Steuerkolben (45, 47) und dem stößelartigen Teil im Sinne einer Erhöhung der Federvorspannung vergrößert;
g) die zweite Einstelleinrichtung (59, 60, 74) ist derart mit der Zugfeder (58) und mit der ersten Einstelleinrichtung (64, 74) wirkverbunden, daß durch Drehen des stößelartigen Teiles und gleichzeitiges Drehen des rotationssymmetrischen Körpers um ihre gemeinsame Drehachse in der einen Drehrichtung das zweite Einstellelement (59, 60) im Sinne einer Verringerung der Anzahl der wirksamen Federwindungen der Zugfeder (58) weiter in die Zugfeder (58) hineingedreht wird, wobei das zweite Einstellelement (59, 60), das stößelartige Teil und der rotationssymmetrische Körper sich in Richtung auf den Steuerkolben (45, 47) zu bewegen und durch Drehen des stößelartigen Teiles und gleichzeitiges Drehen des rotationssymmetrischen Körpers um ihre gemeinsame Drehachse in der anderen Drehrichtung das zweite Einstellelement (59, 60) im Sinne einer Erhöhung der Anzahl der wirksamen Federwindungen der Zugfeder (58) weiter aus der Zugfeder (58) herausgedreht wird, wobei der rotationssymmetrische Körper, das stößelartige Teil und das zweite Einstellelement (59, 60) sich in Richtun vom Steuerkolben (45, 47) weg bewegen.

7. Lastabhängig steuerbare Bremskraftregelventileinrichtung nach wenigstens einem der vorhergehenden Ansprüche 5 oder 6, **dadurch gekennzeichnet, daß** die sich radial nach außen erstreckenden Vorsprünge von einem auf dem Umfang des zweiten Einstellelementes (59, 60) angeordneten Gewinde (59) gebildet werden, in welches die Windungen der Zugfeder (58) eingreifen.

8. Lastabhängig steuerbare Bremskraftregelventileinrichtung nach wenigstens einem der vorhergehenden Ansprüche, **gekennzeichnet durch** die folgenden Merkmale:
a) das Einstellelement (64) zum Einstellen der Vorspannung der Zugfeder (58) weist eine zu seiner Stirnseite hin offene nutartige Ausnehmung (86) auf;
b) die die nutartige Ausnehmung (86) seitlich begrenzende äußere Wand des Einstellelementes (64) weist eine Mehrzahl von in Richtung der Längsachse des Einstellelementes (64) verlaufenden Schlitzen auf, welche die äußere Wand in mehrere elastisch verformbare Abschnitte (87) unterteilen;
c) in der nutartigen Ausnehmung (86) ist ein elastisch verformbarer ringförmiger Körper (71) angeordnet, welcher unter Vorspannung an den elastisch verformbaren Abschnitten (87) anliegt und die elastsich verformbaren Abschnitte (87) gegen die das Gegengewinde (63) aufweisende Wand des Gehäuses (1, 6, 78) drückt.

9. Lastabhängig steuerbare Bremskraftregelventileinrichtung nach wenigstens einem der vorhergehenden Ansprüche, **gekennzeichnet durch** die folgenden Merkmale:
a) der Steuerkolben (45, 47) ist in einer Öffnung (42) des Gehäuses (1, 6, 78) in Richtung der Längsachse des Gehäuses (1, 6, 78) bewegbar zwischen dem Stellglied (39) und einer Wand (61) des Gehäuses (1, 6, 78) angeordnet;
b) die Wand (61) besitzt eine Durchgangsöffnung (76), durch welche das mit der Zugfeder (58) verbundene Halteelement (74) hindurchgeführt ist;
c) das Einstellelement (64) zum Einstellen der Vorspannung der Zugfeder (58) ist auf dem Bereich des Halteelementes (74) angeordnet, welcher auf der dem Steuerkolben (45, 47) abgewandten Seite der Wand (61) gelegen ist.

10. Lastabhängig steuerbare Bremskraftregelventileinrichtung nach Anspruch 9, **gekennzeichnet durch** die folgenden Merkmale:
a) es ist ein Dichtring (62) vorgesehen, der einerseits an der die Durchgangsöffnung (76) begrenzenden Wand (61) und andererseits an der Mantelfläche des Halteelementes (74) dichtend anliegt;
b) der die Zugfeder (58) aufnehmende, vom Steuerkolben (45, 47) und von der Wand (61) begrenzte Raum dient als Druckmittelkammer (79), die über einen Druckmittelanschluß (55) mit einer Druckmittelquelle verbindbar ist;
c) auf der der Druckmittelkammer (79) abgewandten Seite der Wand (61) ist am Gehäuse (1, 6, 78) koaxial zum Halteelement (74) ein rohrförmiger Fortsatz (75) angeordnet;
d) die dem Halteelement (74) zugewandte Wand des rohrförmigen Fortsatzes (75) weist das Gegengewinde (63) auf, in welches das Gewinde (70) des Einstellelementes (64) eingreift.

11. Lastabhängig steuerbare Bremskraftregelventileinrichtung nach Anspruch 9, **dadurch gekennzeichnet, daß** das Halteelement (74) auf seiner den Steuerkolben (45, 47) abgewandten Seite auf wenigstens einem Teil seiner axialen Erstreckung ein Gewinde aufweist, auf welches eine als Einstellelement dienende Mutter aufgeschraubt ist, welche sich an der Wand (61) abstützt.

12. Lastabhängig steuerbare Bremskraftregelventileinrichtung nach Anspruch 9, **gekennzeichnet durch** die folgenden Merkmale:
a) das Einstellelement (64) besitzt auf seiner der Wand (61) abgewandten Seite Ausnehmungen (65, 69) zur Aufnahme eines Werkzeugs auf;
b) das Halteelement (74) besitzt an seiner dem Steuerkolben (45, 47) abgewandten Seite eine Ausformung (68) zur Aufnahme eines Werkzeugs.

13. Lastabhängig steuerbare Bremskraftregelventileinrichtung nach wenigstens einem der vorhergehenden Ansprüche, **dadurch gekennzeichnet, daß** der Bremsdruckregelkolben (3, 7), das Einlaßventil (32, 33) und Auslaßventil (33, 34), das Stellglied (39), der Steuerkolben (45, 47), die Zugfeder (58) sowie die Einrichtung (64, 74) zum Vorspannen und/oder die Einrichtung (59, 60, 74) zum Einstellen der Federkonstanten der Zugfeder (58) gleichachsig oder annähernd gleichachsig zueinander angeordnet sind.

## Claims

1. Load-controllable brake force control valve arrangement for a pressure medium-operated vehicle brake system, having the following features:
a) an inlet valve (32, 33) and an outlet valve (33, 34) are arranged in the housing (1, 6, 78) of the brake force control valve arrangement;
b) a brake pressure control piston (7, 3) arranged in the housing (1, 6, 78) serves to actuate the inlet valve (32, 33) and the outlet valve (33, 34);
c) the controlled variable of the brake force control valve arrangement is adjustable from no load to full load by means of an actuator (39) arranged in the housing (1, 6, 78) and displaceable in dependence on load;
d) a control piston (45, 47), which is movable by a pressure medium against the force of a spring, is used for load-dependent displacement of the actuator (39);
e) an adjusting device (64, 74) for the spring is provided;
f) the spring is in operative connection with the adjusting device (64, 74);
g) the adjusting device (64, 74) serves for adjusting the bias of the spring and has an adjusting element (64) and a holding element (74) co-operating therewith for the spring;
**characterised by** the following features:
h) the spring is in the form of a tension spring (58) and is fastened at one end to the control piston (45, 47) on the side of the control piston (45, 47) remote from the actuator (39), or to a part connected to the control piston (45, 47);
i) the other end of the tension spring (58) is connected to the adjusting device (64, 74);
k) the adjusting element (64) and the holding element (74) for the tension spring (58) are connected to one another;
l) for adjusting the bias of the tension spring (58) the adjusting element (64) and/or the holding element (74) are/is displaceable towards the control piston (45, 47) or away from the control piston (45, 47).

2. Load-controllable brake force control valve arrangement for a pressure medium-operated vehicle brake system, having the following features:
a) an inlet valve (32, 33) and an outlet valve (33, 34) are arranged in the housing (1, 6, 78) of the brake force control valve arrangement;
b) a brake pressure control piston (7, 3) arranged in the housing (1, 6, 78) serves to actuate the inlet valve (32, 33) and the outlet valve (33, 34);
c) the controlled variable of the brake force control valve arrangement is adjustable from no load to full load by means of an actuator (39) arranged in the housing (1, 6, 78) and displaceable in dependence on load;
d) a control piston (45, 47), which is movable by a pressure medium against the force of a spring, is used for load-dependent displacement of the actuator (39);
e) an adjusting device (74, 59, 60) for the spring is provided;
f) the spring is in operative connection with the adjusting device (74, 59, 60);
g) the adjusting device (74, 59, 60) serves for adjusting the spring constant of the spring and has an adjusting element (59, 60) and a holding element (74) co-operating therewith for the spring, the adjusting element (59, 60) being connected to the spring, for adjustment of the spring constant of the spring, so that it is displaceable in the turns of the spring by rotation;
**characterised by** the following features:
h) the spring is in the form of a tension spring (58) and is fastened at one end to the control piston (45, 47) on the side of the control piston (45, 47) remote from the actuator (39), or to a part connected to the control piston (45, 47);
i) the other end of the tension spring (58) is connected to the adjusting device (59, 60, 74);
k) the adjusting element (59, 60) and the holding element (74) for the tension spring (58) are connected to one another.

3. Load-controllable brake force control valve arrangement for a pressure medium-operated vehicle brake system, having the following features:
a) an inlet valve (32, 33) and an outlet valve (33, 34) are arranged in the housing (1, 6, 78) of the brake force control valve arrangement;
b) a brake pressure control piston (7, 3) arranged in the housing (1, 6, 78) serves to actuate the inlet valve (32, 33) and the outlet valve (33, 34);
c) the controlled variable of the brake force control valve arrangement is adjustable from no load to full load by means of an actuator (39) arranged in the housing (1, 6, 78) and displaceable in dependence on load;
d) a control piston (45, 47), which is movable by a pressure medium against the force of a spring, is used for load-dependent displacement of the actuator (39);
e) an adjusting device for the spring is provided;
f) the spring is in operative connection with the adjusting device;
g) the adjusting device serves as a first adjusting device (64, 74) by means of which the bias of the spring is adjustable;
h) the first adjusting device (64, 74) has a first adjusting element (64) and a holding element (74) operatively connected therewith for the spring;
i) a second adjusting device (59, 60, 74) is provided, by means of which the spring constant of the spring is adjustable;
k) the second adjusting device (59, 60, 74) comprises a second adjusting element (59, 60), which is connected to the spring in such a way that it is displaceable in the turns of the spring by rotation;
**characterised by** the following features:
l) the spring is in the form of a tension spring (58) and is fastened at one end to the control piston (45, 47) on the side of the control piston (45, 47) remote from the actuator (39), or to a part connected to the control piston (45, 47);
m) the other end of the tension spring (58) is connected to the adjusting device (64, 74);
n) the first adjusting element (64) and/or the holding element (74) are/is displaceable towards the control piston (45, 47) or away from the control piston (45, 47) in order to adjust the bias of the tension spring (58);
o) the second adjusting device (59, 60, 74) is formed by the holding element (74) of the first adjusting device (64, 74) and the second adjusting element (59, 60), the second adjusting element (59, 60) being arranged on the holding element (74) at the end region of the holding element (74) remote from the first adjusting element (64).

4. Load-controllable brake force control valve arrangement according to claim 1, **characterised by** the following features:
a) the holding element (74) is in the form of a plunger-like part;
b) the adjusting element (64) is in the form of a rotationally symmetrical body;
c) the rotationally symmetrical body is arranged on the plunger-like part at the end of the plunger-like part remote from the tension spring (58) so that it is rotatable about the longitudinal axis of the plunger-like part and secured against movement in the direction of the longitudinal axis of the plunger-like part relative to the plunger-like part;
d) on the circumference of the rotationally symmetrical body there is arranged a thread (70), which engages in a counter-thread (63) arranged in the wall of the housing (1, 6, 78);
e) the adjusting device (64, 74) co-operates with the tension spring (58) so that, by rotation of the rotationally symmetrical body about its longitudinal axis in one direction of rotation, the plunger-like part and/or the rotationally symmetrical body move towards the control piston (45, 47), whereby the distance spanned by the tension spring (58) between the control piston (45, 47) and the plunger-like part decreases, to decrease the spring bias of the tension spring (58), and by rotation of the rotationally symmetrical body about its longitudinal axis in the other direction of rotation, the plunger-like part and/or the rotationally symmetrical body move away from the control piston (45, 47), whereby the distance between the control piston (45, 47) and the plunger-like part increases, to increase the spring bias.

5. Load-controllable brake force control valve arrangement according to claim 2, **characterised by** the following features:
a) the holding element (74) is in the form of a plunger-like part;
b) the adjusting element is formed by the end region of the plunger-like part facing the tension spring (58), wherein radially outwardly extending projections that engage in the turns of the tension spring (58) are arranged on the circumference of this end region of the plunger-like part;
c) on the circumference of the plunger-like part or on the circumference of a rotationally symmetrical body connected to the plunger-like part there is arranged a thread that engages in a counter-thread arranged in the wall of the housing (1, 6, 78);
d) the adjusting device (59, 50, 74) is operatively connected to the tension spring (58) so that, on rotary movement of the adjusting device (59, 60, 74) about its longitudinal axis in one direction of rotation, the adjusting element (59, 60) is screwed further into the tension spring (58) to reduce the number of effective spring turns of the tension spring (58), wherein the plunger-like part and the adjusting element (59, 60) move towards the control piston (45, 47), and on rotary movement of the adjusting device (59, 60, 74) in the other direction of rotation the adjusting element (59, 60) is screwed further out of the tension spring (58) to increase the number of effective spring turns of the tension spring (58), wherein the plunger-like part and the adjusting element (59, 60) move away from the control piston (45, 47).

6. Load-controllable brake force control valve arrangement according to claim 3, **characterised by** the following features:
a) the holding element (74) is in the form of a plunger-like part;
b) the first adjusting element (64) is in the form of a rotationally symmetrical body;
c) the rotationally symmetrical body is arranged on the plunger-like part at the end of the plunger-like part remote from the tension spring (58) so that it is rotatable about the longitudinal axis of the plunger-like part and secured against movement in the direction of the longitudinal axis of the plunger-like part relative to the plunger-like part;
d) on the circumference of the rotationally symmetrical body there is arranged a thread (70), which engages in a counter-thread (63) arranged in the wall of the housing (1, 6, 78);
e) the second adjusting element is formed by the end region of the plunger-like part facing the tension spring (58), radially outwardly extending projections that engage in the turns of the tension spring (58) being arranged on the circumference of this end region of the plunger-like part;
f) the first adjusting device (64, 74) co-operates with the tension spring (58) so that, by rotation of the rotationally symmetrical body about its longitudinal axis in one direction of rotation, the rotationally symmetrical body and the plunger-like part move towards the control piston (45, 47), whereby the distance spanned by the tension spring (58) between the control piston (45, 47) and the plunger-like part decreases, to decrease the spring bias of the tension spring (58), and by rotation of the rotationally symmetrical body about its longitudinal axis in the other direction of rotation, the rotationally symmetrical body and the plunger-like part move away from the control piston (45, 47), whereby the distance between the control piston (45, 47) and the plunger-like part enlarges, to increase the spring bias;
g) the second adjusting device (59, 60, 74) is operatively connected with the tension spring (58) and with the first adjusting device (64, 74) so that, by rotation of the plunger-like part and by simultaneous rotation of the rotationally symmetrical body about their common axis of rotation in one direction of rotation, the second adjusting element (59, 60) is screwed further into the tension spring (58) to reduce the number of effective spring turns of the tension spring (58), wherein the second adjusting element (59, 60), the plunger-like part and the rotationally symmetrical body move towards the control piston (45, 47), and by rotation of the plunger-like part and by simultaneous rotation of the rotationally symmetrical body about their common axis of rotation in the other direction of rotation, the second adjusting element (59, 60) is screwed further out of the tension spring (58) to increase the number of effective spring turns of the tension spring (58), wherein the rotationally symmetrical body, the plunger-like part and the second adjusting element (59, 60) move away from the control piston (45, 47).

7. Load-controllable braking force control valve arrangement according to at least one of the preceding claims 5 and 6, **characterised in that** the radially outwardly extending projections are formed by a thread (59) arranged on the circumference of the second adjusting element (59, 60), in which thread the turns of the tension spring (58) engage.

8. Load-controllable braking force control valve arrangement according to at least one of the preceding claims, **characterised by** the following features:
a) the adjusting element (64) for adjusting the bias of the tension spring (58) has a groove-like recess (86) open towards the end face of the spring;
b) the outer wall of the adjusting element (64) laterally bounding the groove-like recess (86) has a plurality of slots running in the direction of the longitudinal axis of the adjusting element (64), which subdivide the outer wall into several resiliently deformable segments (87);
c) a resiliently deformable annular body (71) is arranged in the groove-like recess (86), which abuts, under bias, the resiliently deformable segments (87) and presses the resiliently deformable segments (87) towards the wall of the housing (1, 6, 78) having the counter-thread (63).

9. Load-controllable braking force control valve arrangement according to at least one of the preceding claims, **characterised by** the following features:
a) the control piston (45, 47) is arranged between the actuator (39) and a wall (61) of the housing (1, 6, 78) in an opening (42) of the housing (1, 6, 78) so as to be movable in the direction of the longitudinal axis of the housing (1, 6, 78);
b) the wall (61) has a through-opening (76) through which the holding element (74) connected to the tension spring (58) is guided;
c) the adjusting element (64) for adjusting the bias of the tension spring (58) is arranged on the region of the holding element (74) which is positioned on the side of the wall (61) remote from the control piston (45, 47).

10. Load-controllable braking force control valve arrangement according to claim 9, **characterised by** the following features:
a) an annular seal (62) is provided, which abuts, forming a seal, on one side against the wall (61) bounding the through-opening (76) and on the other side against the outer surface of the holding element (74);
b) the space receiving the tension spring (58) and bounded by the control piston (45, 47) and by the wall (61) serves as pressure medium chamber (79), which is connectable *via* a pressure medium connection (55) to a pressure medium source;
c) on the side of the wall (61) remote from the pressure medium chamber (79) a tubular extension (75) is arranged on the housing (1, 6, 78) coaxially with respect to the holding element (74);
d) the wall of the tubular extension (75) facing the holding element (74) has the counter-thread (63), in which the thread (70) of the adjusting element (64) engages.

11. Load-controllable braking force control valve arrangement according to claim 9, **characterised in that** the holding element (74) has on its side remote from the control piston (45, 47) on at least a part of its axial length, a thread onto which is screwed a nut serving as adjusting element, which nut is supported against the wall (61).

12. Load-controllable braking force control valve arrangement according to claim 9, **characterised by** the following features:
a) the adjusting element (64) has on its side remote from the wall (61) apertures (65, 69) for receiving a tool;
b) the holding element (74) has on its side remote from the control piston (45, 47) a recess (68) for receiving a tool.

13. Load-controllable braking force control valve arrangement according to at least one of the preceding claims, **characterised in that** the brake pressure control piston (3, 7), the inlet valve (32, 33), and the outlet valve (33, 34), the actuator (39), the control piston (45, 47), the tension spring (58) and the device (64, 74) for biasing and/or the device (59, 60, 74) for adjusting the spring constant of the tension spring (58) are arranged equiaxially or approximately equiaxially with respect to one another.

## Revendications

1. Agencement de soupapes de régulation de force de freinage à commande en fonction de la charge pour une installation de freinage à fluide sous pression dans un véhicule automobile, présentant les éléments suivants :
a) une valve d'entrée (32, 33) et une valve de sortie (33, 34) sont agencées dans le boîtier (1, 6, 78) de l'agencement de soupapes ;
b) un piston de régulation de pression de freinage (7, 3) agencé dans le boîtier (1, 6, 78) sert à l'actionnement de la valve d'entrée (32, 33) et de la valve de sortie (33, 34) ;
c) la valeur de régulation de l'agencement de soupapes depuis la charge à vide jusqu'à la pleine charge est susceptible d'être réglée au moyen d'un organe de positionnement (39) agencé dans le boîtier (1, 6, 78) et mobile en fonction de la charge ;
d) pour le déplacement de l'organe de positionnement (39) en fonction de la charge sert un piston de commande (45, 47) susceptible de se déplacer au moyen d'un fluide sous pression à l'encontre de la force d'un ressort ;
e) il est prévu un dispositif de réglage (64, 74) pour le ressort ;
f) le ressort est en liaison de coopération avec le dispositif de réglage (64, 74) ;
g) le dispositif de réglage (64, 74) sert à régler la précontrainte du ressort et possède un élément de réglage (64) et un élément de retenue (74), qui coopère avec ce dernier, pour le ressort ;
**caractérisé par** les caractéristiques suivantes :
h) le ressort est réalisé sous forme de ressort de traction (58) et il est fixé par l'une de ses extrémités sur le côté, détourné de l'organe de positionnement (39), sur le piston de commande (45, 47) ou sur une pièce reliée au piston de commande (45, 47) ;
i) l'autre extrémité du ressort de traction (58) est reliée au dispositif de réglage (64, 74) ;
k) l'élément de réglage (64) et l'élément de retenue (74) pour le ressort de traction (58) sont reliés l'un à l'autre ; et
l) l'élément de réglage (64) et/ou l'élément de retenue (74) est susceptible d'être déplacé dans la direction du piston de commande (45, 47), ou en éloignement du piston de commande (45,47) pour le réglage de la précontrainte du ressort de traction (58).

2. Agencement de soupapes de régulation de force de freinage à commande en fonction de la charge, pour une installation de freinage à fluide sous pression dans un véhicule automobile, comportant les éléments suivants :
a) une valve d'entrée (32, 33) et une valve de sortie (33, 34) sont agencées dans le boîtier (1, 6, 78) de l'agencement de soupapes ;
b) pour l'actionnement de la valve d'entrée (32, 33) et de la valve de sortie (33, 34) sert un piston de régulation de pression de freinage (7, 3) agencé dans le boîtier (1, 6, 78) ;
c) la valeur de régulation de l'agencement de soupapes depuis la charge à vide jusqu'à la pleine charge est susceptible d'être réglée au moyen d'un organe de positionnement (39) agencé dans le boîtier (1, 6, 78) et mobile en fonction de la charge ;
d) pour le déplacement de l'organe de positionnement (39) en fonction de la charge sert un piston de commande (45, 47) susceptible d'être déplacé au moyen d'un fluide sous pression à l'encontre de la force d'un ressort ;
e) il est prévu un dispositif de réglage (74, 59, 60) pour le ressort ;
f) le ressort est en liaison de coopération avec le dispositif de réglage (74, 59, 60) ;
g) le dispositif de réglage (74, 59, 60) sert à régler la constante élastique du ressort et possède un élément de réglage (59, 60) et un élément de retenue (74), qui coopère avec ce dernier, pour le ressort, et de sorte que l'élément de réglage (59, 60) destiné au réglage de la constante élastique du ressort est relié au ressort de telle sorte qu'il peut être déplacé par rotation dans les spires du ressort ;
**caractérisé par** les caractéristiques suivantes :
h) le ressort est réalisé sous forme de ressort de traction (58) et il est fixé à l'une de ses extrémités sur le côté, détourné de l'organe de positionnement (59), du piston de commande (45, 47) sur le piston de commande (45, 47) ou sur une pièce reliée au piston de commande (45,47) ;
i) l'autre extrémité du ressort de traction (58) est reliée au dispositif de réglage (59, 60, 74) ; et
k) l'élément de réglage (59, 60) et l'élément de retenue (74) pour le ressort de traction (58) sont reliés l'un à l'autre.

3. Agencement de soupapes de régulation de force de freinage à commande en fonction de la charge pour une installation de freinage à fluide sous pression dans un véhicule automobile, comportant les éléments suivants :
a) une valve d'entrée (32, 33) et une valve de sortie (33, 34) sont agencées dans le boîtier (1, 6, 78) de l'agencement de soupapes ;
b) pour l'actionnement de la valve d'entrée (32, 33) et de la valve de sortie (33, 34) sert un piston de régulation de pression de freinage (7, 3) agencé dans le boîtier (1, 6, 78) ;
c) la valeur de régulation de l'agencement de soupapes depuis la charge à vide jusqu'à la pleine charge est susceptible d'être réglée au moyen d'un organe de positionnement (39) agencé dans le boîtier (1, 6, 78) et mobile en fonction de la charge ;
d) pour le déplacement de l'organe de commande (39) en fonction de la charge sert un piston de commande (45, 47), mobile au moyen d'un fluide sous pression à l'encontre de la force d'un ressort ;
e) il est prévu un dispositif de réglage pour le ressort ;
f) le ressort est en liaison de coopération avec le dispositif de réglage ;
g) le dispositif de réglage fait office de premier dispositif de réglage (64, 74) au moyen duquel la précontrainte du ressort est réglable ;
h) le premier dispositif de réglage (64, 74) possède un premier élément de réglage (64) et un élément de retenue (74), relié en termes d'actionnement à celui-ci, pour le ressort ;
i) il est prévu un deuxième dispositif de réglage (59, 60, 74) au moyen duquel la constante élastique du ressort réglable ;
k) le deuxième dispositif de réglage (59, 60, 74) comporte un deuxième élément de réglage (59, 60) qui est relié au ressort de telle manière qu'il est susceptible de se déplacer par rotation dans les spires du ressort ;
**caractérisé par** les caractéristiques suivantes :
l) le ressort est réalisé sous forme de ressort de traction (58) et il est fixé par l'une de ses extrémités sur le côté, détourné de l'organe de positionnement (39), du piston de commande (45, 47), sur le piston de commande (45, 47) ou sur une pièce reliée au piston de commande (45, 47) ;
m) l'autre extrémité du ressort de traction (58) est reliée au dispositif de réglage (64, 74) ;
n) le premier élément de réglage (64) et/ou l'élément de retenue (74) est déplaçable en direction du piston de commande (45, 47), ou en éloignement du piston de commande (45, 47) pour le réglage de la précontrainte du ressort de traction (58) ; et
o) le deuxième dispositif de réglage (59, 60, 74) est constitué par l'élément de retenue (74) du premier dispositif de réglage (64, 74) et par le deuxième élément de réglage (59, 60), de sorte que le deuxième élément de réglage (59, 60) est agencé sur l'élément de retenue (74), dans la zone terminale de l'élément de retenue (74) détournée du premier élément de réglage (64).

4. Agencement de soupapes selon la revendication 1, **caractérisé par** les caractéristiques suivantes :
a) l'élément de retenue (74) est réalisé sous forme d'une pièce analogue à un poussoir;
b) l'élément de réglage (64) est réalisé sous forme d'un corps à symétrie de révolution ;
c) le corps à symétrie de révolution est agencé sur l'extrémité de la pièce en forme de poussoir détournée du ressort de traction (58) avec faculté de rotation autour de l'axe longitudinal de la pièce en forme de poussoir, et il est fixé sur la pièce en forme de poussoir à l'encontre d'un déplacement par rapport à la pièce en forme de poussoir en direction de l'axe longitudinal de celle-ci ;
d) un filetage (70) est ménagé sur la périphérie du corps à symétrie de révolution, ce filetage s'engageant dans un taraudage complémentaire (63) ménagé dans la paroi du boîtier (1, 6, 78) ;
e) le dispositif de réglage (64, 74) coopère avec le ressort de traction (58) de telle manière que par rotation du corps à symétrie de révolution autour de son axe longitudinal dans une direction de rotation la pièce en forme de poussoir et/ou le corps à symétrie de révolution se déplace en direction du piston de commande (45, 47), ce pourquoi la distance comblée par le ressort de traction (58) entre le piston de commande (45, 47) et la pièce en forme de poussoir diminue dans le sens d'une diminution de la précontrainte élastique du ressort de traction (58), et que par rotation du corps à symétrie de révolution autour de son axe longitudinal dans l'autre direction de rotation la pièce en forme de poussoir et/ou le corps symétrie de révolution se déplace en éloignement du piston de commande (45, 47) ce pourquoi la distance entre le piston de commande (45, 47) et la pièce en forme de poussoir augmente dans le sens d'une augmentation de la précontrainte du ressort.

5. Agencement de soupapes selon la revendication 2, **caractérisé par** les caractéristiques suivantes :
a) l'élément de retenue (74) est réalisé sous la forme d'une pièce analogue à un poussoir ;
b) l'élément de réglage est formé par la zone terminale, tournée vers le ressort de traction (58), de la pièce en forme de poussoir, et il est prévu des saillies qui s'étendent radialement vers l'extérieur, agencées sur la périphérie de cette zone terminale de la pièce en forme de poussoir, lesdites saillies s'engageant dans les spires du ressort de traction (58) ;
c) un filetage est ménagé sur la périphérie de la pièce en forme de poussoir, ou sur la périphérie du corps à symétrie de révolution relié à la pièce en forme de poussoir, ce filetage s'engageant dans un taraudage complémentaire ménagé dans la paroi du boîtier (1, 6, 78) ;
d) le dispositif de réglage (59, 50, 74) est relié en termes d'action au ressort de traction (58) de telle sorte que lors d'un mouvement de rotation du dispositif de réglage (59, 60, 74) autour de son axe de rotation dans une direction de rotation l'élément de réglage (59, 60) est tourné plus loin dans le ressort de traction (58) dans le sens d'une réduction du nombre des spires actives du ressort de traction (58), et la pièce en forme de poussoir et l'élément de réglage (59, 60) se déplacent en direction du piston de commande (45, 47), et que lors d'un mouvement de rotation du dispositif de réglage (59, 60, 74) dans l'autre direction de rotation l'élément de réglage (59, 60) est tourné en sortant du ressort de traction (58) dans le sens d'une augmentation du nombre des spires actives du ressort de traction (58), et la pièce en forme de poussoir et l'élément de réglage (59, 60) se déplacent en éloignement du piston de commande (45, 47).

6. Agencement de soupapes selon la revendication 3, **caractérisé par** les caractéristiques suivantes :
a) l'élément de retenue (74) est réalisé sous forme d'une pièce analogue à un poussoir ;
b) le premier élément de réglage (64) est réalisé sous forme d'un corps à symétrie de révolution ;
c) le corps à symétrie de révolution est agencé sur l'extrémité, détournée du ressort de traction (58), de la pièce en forme de poussoir avec faculté de rotation autour de l'axe longitudinal de la pièce en forme de poussoir, et il est fixé sur la pièce en forme de poussoir à l'encontre d'un déplacement par rapport à ladite pièce en forme de poussoir en direction de l'axe longitudinal de celle-ci ;
d) un filetage (70) est ménagé sur la périphérie du corps à symétrie de révolution, et s'engage dans un taraudage complémentaire (63) ménagé dans la paroi du boîtier (1, 6, 78) ;
e) le deuxième élément de réglage est formé par la zone terminale, tournée vers le ressort de traction (58), de la pièce en forme de poussoir, et il est prévu des saillies qui s'étendent radialement vers l'extérieur, agencées sur la périphérie de cette zone terminale de la pièce en forme de poussoir, et qui s'engagent dans les spires du ressort de traction (58) ;
f) le premier dispositif de réglage (64, 74) coopère avec le ressort de traction (58) de telle manière que par rotation du corps à symétrie de révolution autour de son axe longitudinal dans une direction de rotation le corps à symétrie de révolution et la pièce en forme de poussoir se déplacent en direction du piston de commande (45, 47), ce pourquoi la distance comblée par le ressort de traction (58) entre le piston de commande (45, 47) et la pièce en forme de poussoir diminue dans le sens d'une réduction de la précontrainte du ressort de traction (58), et que par rotation du corps à symétrie de révolution autour de son axe longitudinal dans l'autre direction de rotation le corps à symétrie de révolution et la pièce en forme de poussoir se déplacent en éloignement du piston de commande (45, 47), ce pourquoi la distance entre le piston de commande (45, 47) et la pièce en forme de poussoir augmente dans le sens d'une augmentation de la précontrainte du ressort ; et
g) le deuxième dispositif de réglage (59, 60, 74) est relié en coopération avec le ressort de traction (58) et avec le premier dispositif de réglage (64, 74) de telle manière que par rotation de la pièce en forme de poussoir et par rotation simultanée du corps à symétrie de révolution autour de leur axe de rotation commun dans une direction de rotation le deuxième élément de réglage (59, 60) est tourné plus loin dans le ressort de traction (58) dans le sens d'une réduction du nombre des spires actives du ressort de traction (58), et la pièce en forme de poussoir et le corps à symétrie de révolution se déplacent en direction du piston de commande (45, 47), et que par rotation de la pièce en forme de poussoir et par rotation simultanée du corps à symétrie de révolution autour de leur axe de rotation commun dans l'autre direction de rotation le deuxième élément de réglage (59, 60) est sorti hors du ressort de traction (53) dans le sens d'une augmentation du nombre des spires actives du ressort de traction (58), et le corps à symétrie de révolution, la pièce en forme de poussoir, et le deuxième élément de réglage (59, 60) se déplacent en éloignement du piston de commande (45, 47).

7. Agencement de soupapes selon l'une au moins des revendications 5 et 6, **caractérisé en ce que** les saillies qui s'étendent radialement vers l'extérieur sont formées par un filetage (59) ménagé sur la périphérie du deuxième élément de réglage (59, 60) et dans lequel s'engagent les spires du ressort de traction (58).

8. Agencement de soupapes selon l'une au moins des revendications précédentes, **caractérisé par** les caractéristiques suivantes :
a) l'élément de réglage (64) destiné au réglage de la précontrainte du ressort de traction (58) comporte un évidement (86) en forme de gorge ouvert sur son côté frontal ;
b) la paroi extérieure, qui délimite latéralement l'évidement en forme de gorge (86), de l'élément de réglage (64) comporte une pluralité de fentes qui s'étendent en direction de l'axe longitudinal de l'élément de réglage (64) et qui subdivisent la paroi extérieure en plusieurs tronçons (87) élastiquement déformables ; et
c) dans l'évidement en forme de gorge (86) est agencé un corps annulaire (71) élastiquement déformable, celui-ci s'appliquant sous précontrainte contre les tronçons (87) élastiquement déformables et repoussant les tronçons (87) élastiquement déformables contre la paroi du boîtier (1, 6, 78) qui comporte le taraudage complémentaire (63).

9. Agencement de soupapes selon l'une au moins des revendications précédentes, **caractérisé par** les caractéristiques suivantes :
a) le piston de commande (45, 47) est agencé, dans une ouverture (42) du boîtier (1, 6, 78), entre l'organe de positionnement (30) et une paroi (61) du boîtier (1, 6, 78) avec faculté de déplacement en direction de l'axe longitudinal du boîtier (1, 6, 78) ;
b) la paroi (61) possède une ouverture traversante (76) à travers laquelle est passé l'élément de retenue (74) relié au ressort de traction (58) ;
c) l'élément de réglage (64) pour le réglage de la précontrainte du ressort de traction (58) est agencé sur la région de l'élément de retenue (74) située du côté de la paroi (61) qui est détournée du piston de commande (45, 47).

10. Agencement de soupapes selon la revendication 9, **caractérisé par** les caractéristiques suivantes :
a) il est prévu une bague d'étanchéité (62) qui s'applique avec étanchement d'une part sur la paroi (61) qui délimite l'ouverture traversante (76) et d'autre part sur la surface enveloppe de l'élément de retenue (74) ;
b) l'espace qui reçoit le ressort de traction (58) et qui est délimité par le piston de commande (45, 47) et par la paroi (61) sert de chambre à fluide sous pression (79), susceptible d'être reliée à une source de fluide sous pression par l'intermédiaire d'un raccord à fluide sous pression (55) ;
c) sur le côté, détourné de la chambre à fluide sous pression (79), de la paroi (61) il est prévu un prolongement (75) de forme tubulaire monté sur le boîtier (1, 6, 78) coaxialement par rapport à l'élément de retenue (74) ; et
d) la paroi, tournée vers l'élément de retenue (74), du prolongement de forme tubulaire (75) comporte le taraudage complémentaire (63) dans lequel s'engage le filetage (70) de l'élément de réglage (64).

11. Agencement de soupapes selon la revendication 9, **caractérisé en ce que** l'élément de retenue (74) comporte, sur son côté détourné du piston de commande (45,47) et sur au moins une partie de son extension axiale, un filetage sur lequel est vissé un écrou qui sert d'élément de réglage et qui s'appuie sur la paroi (61).

12. Agencement de soupapes selon la revendication 9, **caractérisé par** les caractéristiques suivantes :
a) l'élément de réglage (64) possède, sur son côté détourné de la paroi (61), des évidements (65, 69) pour la réception d'un outil ; et
b) l'élément de retenue (74) possède, sur son côté détourné du piston de commande (45, 47), un relief (68) pour la réception d'un outil.

13. Agencement de soupapes selon l'une au moins des revendications précédentes, **caractérisé en ce que** le piston de régulation de pression de freinage (3, 7), la valve d'entrée (32, 33) et la valve de sortie (33, 44), l'organe de positionnement (39), le piston de commande (45, 47), le ressort de traction (58), ainsi que les moyens (64, 74) destinés à établir une précontrainte et/ou les moyens (59, 60, 74) pour régler la constante élastique du ressort de traction (58) sont agencés coaxialement, ou approximativement coaxialement les uns par rapport aux autres.
